# EUROPÄISCHE PATENTSCHRIFT

(11) **EP 2 018 990 B1**
(45) Veröffentlichungstag und Bekanntmachung des Hinweises auf die Patenterteilung: **18.05.2016**
(21) Anmeldenummer: 08012173.4
(22) Anmeldetag: 05.07.2008
(51) Int. Cl.: B60K 7/00, B60K 17/04

(54) **Radnabenantrieb für ein Flurförderzeug**
Wheel hub drive for an industrial truck
Commande de moyeu de roue pour un chariot de manutention

(30) Priorität: 26.07.2007 DE 102007035012
(43) Veröffentlichungstag der Anmeldung: 28.01.2009
(73) Patentinhaber: Jungheinrich Aktiengesellschaft, 22047 Hamburg (DE)
(72) Erfinder: Rogg, Andreas, 23554 Lübeck (DE)
(74) Vertreter: Hauck Patentanwaltspartnerschaft mbB

(56) Entgegenhaltungen:
- EP-A1- 1 857 317
- EP-A2- 0 999 081
- EP-A2- 1 889 743
- GB-A- 1 341 825
- US-A- 3 163 250
- US-A- 3 827 528

## Beschreibung

Die Erfindung bezieht sich auf einen Radnabenantrieb für ein Flurförderzeug nach dem Oberbegriff des Patentanspruchs 1 und auf einen Radnabenantrieb für ein Flurförderzeug nach dem Oberbegriff des Patentanspruchs 2.

Dreirad- bzw. Fünfrad-Flurförderzeuge weisen zumeist ein einziges Antriebsrad auf, das zugleich gelenkt ist. Vierrad-Flurförderzeuge haben zumindest ein ungelenktes angetriebenes Rad. Die Erfindung bezieht sich auf angetriebene Räder der verschiedensten Flurförderzeuge. Da die Drehzahl eines Antriebsmotors, etwa eines Elektro- oder Hydromotors, deutlich höher ist als die Drehzahl des angetriebenen Rades, ist üblicherweise ein Untersetzungsgetriebe zwischen der Welle des Antriebsmotors und der Radnabe angeordnet. Das angetriebene Rad muß in geeigneter Weise gelagert sein, um die auftretenden Radaufstandskräfte aufzunehmen, die bei Flurförderzeugen erheblich sein können.

Die Erfindung bezieht sich auf einen Radnabenantrieb für Flurförderzeuge. Es sind Radnabenantriebe bekannt, die eine Radlagerung und ein Antriebsgetriebe aufweisen, wobei die z.B. aus zwei Kegelrollenlagern in O-Anordnung gebildete Radlagerung und ein als Planetengetriebe ausgeführtes Untersetzungsgetriebe nebeneinander koaxial zur Radmittelachse angeordnet sind und der äußere Durchmesser der Kegelrollenlager weitgehend identisch ist mit dem Teilkreisdurchmesser eines Hohlrades des Planetengetriebes. Ein Beispiel eines derartigen Radnabenantriebes, bei dem außerdem eine Bremse integriert ist, ist in EP 1 167 140 B1 offenbart. Ein weiteres findet sich in DE 102 58 913 A1. Ein Radnabenantrieb ähnlicher Bauart, bei dem das Antriebsgetriebe radial innerhalb der Radlagerung untergebracht und an dem sowohl eine Bremse als auch ein Antriebsmotor angebaut ist, ist in DE 100 61 221 A1 beschrieben.

In DE 196 33 071 B2 ist ein einstufiges Planetengetriebe gezeigt, bei dem der Planetenträger zur Aufnahme der Radlagerung dient, die aus einem Wälzlager auf der drehmomentleitenden und einem Wälzlager auf der nicht-drehmomentleitenden Seite des Planetenträgers jeweils seitlich neben der Planetenstufe besteht. Um die geforderte Untersetzung des Antriebsgetriebes zu erreichen, wird das Planetengetriebe durch ein Stirnradgetriebe ergänzt, so daß der Antriebsmotor achsversetzt zur Radmittelachse positioniert ist.

In DE 199 11 458 A1 ist ein Radnabenantrieb eines elektromotorisch gelenkten Rades gezeigt, bei dem die Radlagerung und das Antriebsgetriebe nebeneinander angeordnet sind, wobei ein Drehschemel mit einem Vierpunktlager im Fahrzeugrahmen drehbar gelagert ist. Das Lenkgetriebe ist als Wolfrom-Getriebe ausgeführt und radial innerhalb des Vierpunktlagers untergebracht. In der gleichen Druckschrift ist auch eine Anordnung beschrieben, bei der eine aus zwei Wälzlagern gebildete Drehschemellagerung und das als Planetengetriebe ausgeführte Lenkgetriebe koaxial zur Längsachse übereinander angeordnet sind.

In DE 101 32 319 A1, DE 100 62 315 A1 und DE 103 34 939 A1 sind Radnabenantriebe gelenkter Räder beschrieben, die dadurch gekennzeichnet sind, daß sich der Antriebsmotor oder das Antriebsgetriebe radial innerhalb zumindest eines Wälzlagers der Radlagerung befinden und der Drehschemel mit einem Vierpunktlager im Fahrzeugrahmen drehbar gelagert ist.

In EP 1 867 317 A ist ein Radnabenantrieb vorgeschlagen mit einem topfförmigen Nabenabschnitt mit einem Bodenabschnitt und einem Wandabschnitt, wobei mit dem Bodenabschnitt ein mittiger Lagerzapfen verbunden ist, den der Wandabschnitt mit radialem Abstand umgibt und auf dem zwei Wälzlager sitzen, die radial außen an einem Abschnitt eines als Nabenträger dienenden Getriebegehäuses abgestützt sind. Das Getriebegehäuse enthält seinerseits ein mehrstufiges Stirnradgetriebe als Untersetzungsgetriebe, von dem mindestens eine Abtriebsstufe innerhalb des Nabenabschnitts angeordnet ist, wobei der Wandabschnitt des Nabenabschnitts ein mit dem Abtriebsteil des Stirnradgetriebes in Wirkverbindung stehendes Hohlrad bildet. Aus GB1341825 ist ein Radnabenantrieb gemäss dem Oberbegriff des Anspruchs 1 bekannt. Aus US 3827528 ist ein Radnabenantrieb nach dem Oberbegriff des Anspruchs 2 bekannt, bei dem ein Lagerzapfen der Nabe mit dem Nabenlager verbunden ist und zwei Wälzlager trägt für die Lagerung der Nabe.

Der Erfindung liegt die Aufgabe zugrunde, einen Radnabenantrieb für ein Flurförderzeug zu schaffen, mit dem bei minimalem Bauraum eine höhere Drehmomentkapazität des Getriebes realisiert werden kann.

Diese Aufgabe wird durch die Merkmale des Patentanspruchs 1 bzw. des Patentanspruchs 2 gelöst.

Bei der Erfindung ist ein mehrsträngiges Stirnradgetriebe vorgesehen. Es kämmen mindestens zwei Ritzel mit dem Hohlrad, wobei die Ritzelwellen durch eine den offenen Teil des topfförmigen Radnabenabschnitts abschließende Wand des Getriebegehäuses geführt sind und mindestens eine weitere Stirnradgetriebestufe im Getriebegehäuse außerhalb des Wandabschnitts mit der Antriebswelle gekoppelt ist.

Bei dem erfindungsgemäßen Radnabenantrieb kann eine Leistungsteilung auf mehrere Stränge des Getriebes erfolgen, wodurch eine höhere Drehmomentkapazität bei identischem Bauraum realisiert werden kann. Die innen liegende Radlagerung erlaubt größtmögliche Getriebedurchmesser in bezug auf die Radgröße, ohne daß die axiale Baulänge nennenswert vergrößert werden muß. Wegen kleiner Radlager kann der Aufwand reduziert werden.

In einer weiteren Lösung der erfindungsgemäßen Aufgabe bei einem Radnabenantrieb für Flurförderzeuge einen minimalen Bauraum und eine höhere Drehmomentkapazität des Getriebes zu verwirklichen, ist vorgesehen, dass ein topfförmiger Nabenabschnitt vorgesehen ist, mit dem Nabenträger ein mittiger Lagerzapfen verbunden ist, den der Nabenabschnitt mit radialem Abstand umgibt und auf dem mindestens ein Wälzlager sitzt, das radial außen am Nabenabschnitt abgestützt ist, ein mehrstufiges Stirnradgetriebe als Untersetzungsgetriebe vorgesehen ist, von dem mindestens eine Abtriebsstufe innerhalb des Nabenabschnitts angeordnet ist, wobei der Wandabschnitt des Nabenabschnitts ein mit dem Abtriebsteil des Stirnradgetriebes in Wirkverbindung stehendes Hohlrad bildet, dass ein mehrsträngiges Stirnradgetriebe vorgesehen ist und dass mindestens zwei Ritzel mit dem Hohlrad kämmen, wobei die Ritzelwellen durch eine den offenen Teil des Radnabenabschnitts abschließende Wand des Getriebegehäuses geführt sind und mindestens eine weitere Stirnradgetriebestufe im Getriebegehäuse außerhalb des Wandabschnitts mit der Antriebswelle gekoppelt ist.

Es kann eine dritte Getriebestufe vorgesehen sein, die ein mit der Antriebswelle gekoppeltes Ritzel und ein mit dem Ritzel kämmendes Stirnrad aufweist, wobei eine Welle des Stirnrads zwei Ritzel hält, die mit jeweils einem Stirnrad eines Strangs kämmen. In diesem Fall ist ein zweisträngiges Stirnradgetriebe geschaffen.

Nach einer weiteren Ausgestaltung der Erfindung ist ein Ritzel auf einer koaxial zur Radachse oder zur Radachse versetzten Antriebsachse verschieblich angeordnet, das zwei gegenläufig schräg verzahnte Abschnitte aufweist, die mit einem zugeordneten Stirnrad je Strang kämmen. Bei einer ungleichen Kraftaufnahme je Strang ermöglicht die Verschiebbarkeit des Ritzels eine Vergleichmäßigung durch unterschiedlichen Krafteingriff mit den Stirnrädern.

Nach einer anderen Ausgestaltung der Erfindung ist vorgesehen, daß eine Ritzelwelle die zwei Ritzel bzw. Ritzelabschnitte mit gegenläufiger Schrägverzahnung hält, die mit jeweils einem Stirnrad je Strang kämmen, axial beweglich gelagert ist. Auch auf diese Weise wird eine Vergleichmäßigung der Kraftübertragung über die einzelnen Stränge des Stirnradgetriebes erhalten.

Eine andere Möglichkeit der Vergleichmäßigung der Kraftübertragung besteht erfindungsgemäß darin, daß die Welle von mit dem Hohlrad zusammenwirkenden Ritzeln radial nachgiebig ist. Die Ritzelwelle kann eine ringförmige Einschnürung aufweisen, um die Nachgiebigkeit zu erhöhen. Das Ritzel kann als Hülse ausgeführt sein, welche die Ritzelwelle mit radialem Abstand umgibt, wobei ein Ende der Hülse auf der Ritzelwelle sitzt.

Ist das angetriebene Rad gleichzeitig ein gelenktes, sieht eine Ausgestaltung der Erfindung vor, daß das Getriebegehäuse Teil eines Drehschemels ist, der um eine vertikale Achse im Rahmen des Flurförderzeugs drehbar gelagert ist. Im Drehschemel kann koaxial zur Radlagerachse ein Antriebsmotor angeordnet sein, der nach einer weiteren Ausgestaltung der Erfindung sich innerhalb des Drehschemels befinden kann. Der Drehschemel kann mittels eines Vierpunktlagers im Rahmen des Flurförderzeugs gelagert sein. Alternativ kann nach einer anderen Ausgestaltung der Erfindung vorgesehen werden, daß ein Zapfen des Drehschemels mittels Kegelrollenlagers im Rahmen des Flurförderzeugs gelagert ist. Vorzugsweise werden zwei axial beabstandete Kegelrollenlager vorgesehen.

Zur Lenkung des angetriebenen Rades kann ein Lenkmotor vorgesehen sein, der z.B. nach einer Ausgestaltung der Erfindung über ein Lenkgetriebegehäuse am Rahmen des Flurförderzeugs angebracht ist, wobei das Lenkgetriebegehäuse ein mehrstufiges Stirnradgetriebe enthält, dessen mindestens eines Abtriebsrad mit einem als Hohlrad ausgebildeten Abschnitt des Drehschemels zusammenwirkt.

Nach einer weiteren Ausgestaltung der Erfindung ist mit dem Drehschemel eine Sensorwelle verbunden, die sich durch eine hohle Lenkmotorwelle erstreckt und mit einem Sensor im Innenraum des Lenkmotorgehäuses verbunden ist. In diesem Raum kann auch eine Steuervorrichtung für den Lenkmotor und/oder den Antriebsmotor untergebracht sein. In diesem Zusammenhang sieht eine weitere Ausgestaltung der Erfindung vor, daß für den Antriebsmotor von der Steuervorrichtung ausgehend Leitungen über die hohle Sensorwelle geführt sind.

Ausführungsbeispiele der Erfindung werden nachfolgend anhand von Zeichnungen erläutert.
- Fig. 1: zeigt eine erste Ausführungsform eines Radnabenantriebs nach der Erfindung.
- Fig. 2: zeigt eine Abwandlung des Radnabenantriebs nach Fig. 1.
- Fig. 3: zeigt eine weitere Ausführungsform eines Radnabenantriebs
- Fig. 4: zeigt eine Abwandlung des Radnabenantriebs nach Fig. 3.
- Fig. 5: zeigt eine weitere Ausführungsform eines Radnabenantriebs
- Fig. 6: zeigt eine Modifikation des Radnabenantriebs nach Fig. 5.
- Fig. 7: zeigt eine weitere Modifikation des Radnabenantriebs nach den Figuren 5 oder 6.
- Fig. 8: zeigt eine weitere Ausführungsform eines Radnabenantriebs
- Fig. 9: zeigt eine weitere Ausführungsform eines Radnabenantriebs nach der Erfindung.
- Fig. 10: zeigt eine weitere Ausführungsform eines Radnabenantriebs nach der Erfindung.
- Fig. 11: zeigt eine weitere Ausführungsform eines Radnabenantriebs nach der Erfindung.
- Fig. 12: zeigt die Anordnung eines dreistufigen Stirnradgetriebes vom Antriebsmotor aus gesehen etwa gemäß Fig. 6.
- Fig. 13: zeigt ein dreistufiges Stirnradgetriebe vom Abtriebsteil aus gesehen, etwa gemäß Fig. 6.
- Fig. 14: zeigt die Draufsicht auf ein dreistufiges Stirnradgetriebe mit exzentrischer Anordnung vom Antriebsmotor aus gesehen, etwa gemäß Fig. 2.
- Fig. 15: zeigt ein dreistufiges Stirnradgetriebe mit zwei Abtriebssträngen für einige der Ausführungsformen der voranstehenden Figuren.
- Fig. 16: zeigt ein dreistufiges Stirnradgetriebe mit zwei Abtriebssträngen in einer anderen Ausführungsform.
- Fig. 17: zeigt ein Ritzel für eine Ritzelwelle der Stirnradgetriebe nach den vorstehenden Figuren.
- Fig. 18: zeigt eine ähnliche Darstellung wie Fig. 16 in abgewandelter Ausführung.
- Fig. 19: zeigt ebenfalls eine ähnliche Darstellung wie Fig. 16 in einer wiederum abgewandelten Ausführungsform.
- Fig. 20: zeigt eine weitere Ausführungsform eines Radnabenantriebs nach der Erfindung.

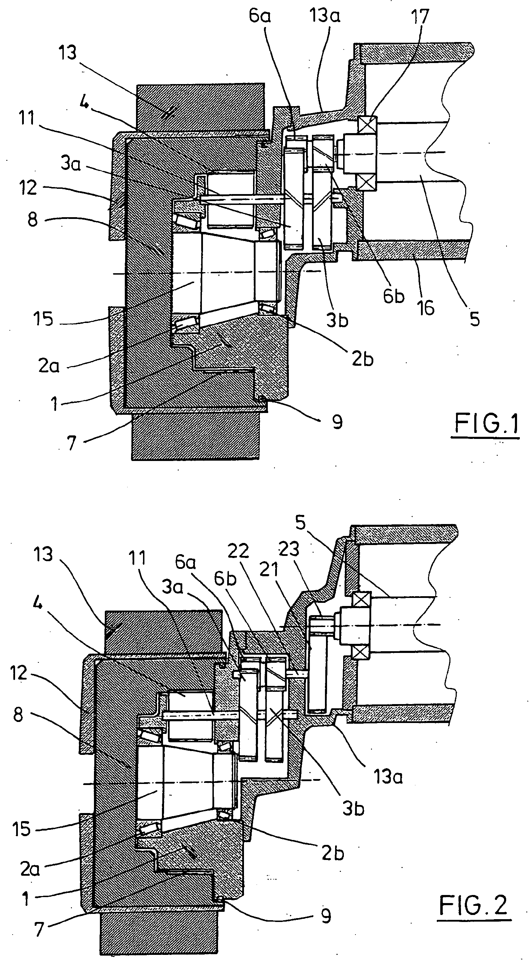

In Fig. 1 sitzt ein Reifen 13 auf einer Radfelge 12. Innerhalb der Radfelge 12 befindet sich ein topfförmiger Radnabenabschnitt 8 mit einem Boden und einem ringförmigen Wandabschnitt. Am Bodenabschnitt ist ein mittiger Lagerzapfen 15 angebracht, der aus zwei zylindrischen Abschnitten an den Enden und einem konischen Zwischenabschnitt besteht. Auf dem Lagerzapfen 15 sind zwei Kegelrollenlager 2a, 2b angeordnet. Die Kegelrollenlager 2a, 2b stützen sich außen auf einem Getriebegehäuseabschnitt 1 ab, der durch eine berührende Dichtung 9 gegenüber dem Radnabenabschnitt 8 abgedichtet ist. Er ist mit einem weiteren Getriebegehäuseabschnitt 13a verbunden, der in Verbindung mit einem weiteren Gehäuseabschnitt 16 steht, in dem eine Antriebswelle 5 angeordnet ist, die über ein Rollenlager 17 im Getriebegehäuse drehbar gelagert ist. Sie steht in Verbindung mit einem nicht gezeigten Antriebsmotor, der im Gehäuse 16 untergebracht sein kann.

Wie bei 7 angedeutet, ist der Wandabschnitt des Nabenabschnitts 8 als Hohlrad ausgebildet, das mit zwei Ritzeln kämmt, von denen eines bei 4 dargestellt ist. Ritzel 4 sitzt auf einer Ritzelwelle 11, die sich durch einen Wandabschnitt des Gehäuseabschnitts 1 erstreckt, der die offene Seite des topfförmigen Nabenabschnitts 8 abschließt. Die Ritzelwelle 11 wird von einem Stirnrad 3a angetrieben, während das parallel angeordnete Stirnrad 3b über eine entsprechende Ritzelwelle das zweite Ritzel antreibt. Die Stirnräder 3a, 3b werden von Ritzeln 6a, 6b auf der Antriebswelle 5 angetrieben. Die Ritzel 6a, 6b haben gegenläufige Schrägverzahnungen, wie auch die Stirnräder 3a, 3b. Die Ritzel 6a, 6b sind auf der Antriebswelle 5 axial verschieblich. In Fig. 1 ist somit ein zweistufiges, zweisträngiges Stirnradgetriebe gezeigt.

Die meisten Bauteile bei der Ausführungsform nach Fig. 2 unterscheiden sich von der nach Fig. 1 nicht. Sie sind daher mit den gleichen Bezugszeichen versehen. Sie werden im einzelnen nicht mehr erläutert. Die Besonderheit in Fig. 2 besteht darin, daß ein dreistufiges Stirnradgetriebe vorgesehen ist, in dem ein Ritzel 23 auf der Antriebswelle 5 mit einem Stirnrad 21 kämmt, das über eine Ritzelwelle 22 mit den Ritzeln 6b, 6a verbunden ist.

Der Antriebsmotor zum Antrieb der Antriebswelle 5 kann bei den Ausführungsformen nach den Fign. 1 und 2 von einem Elektro- oder einem Hydromotor gebildet sein.

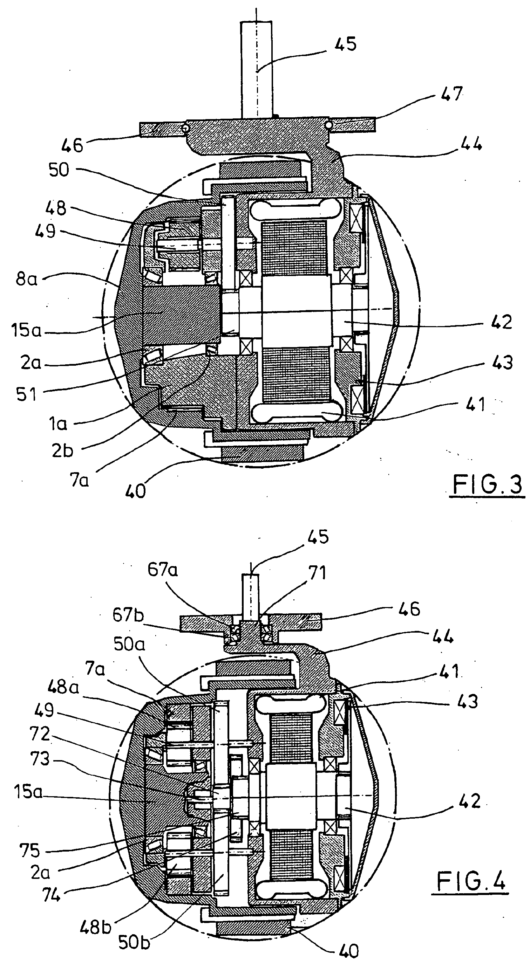

In Fig. 3 bildet ein noch zu beschreibendes Antriebsgetriebe mit angebautem Antriebsrad 40 zusammen mit einem koaxialen Fahrmotor 41 und der auf einer Fahrmotorwelle 42 angebrachten Bremse 43 eine Antriebseinheit, bei der ein Gehäuse 44 für den Antriebsmotor und die Bremse als Drehschemel ausgebildet ist, der um eine Lenkachse 45 über ein Vierpunktlager 47 am Rahmen 46 des Flurförderzeugs drehbar angebracht ist. Die Lenkbewegung wird mittels einer mit dem Gehäuse 44 in Wirkverbindung stehenden Deichsel vom Bediener manuell oder durch einen mit dem Gehäuse 44 in Wirkverbindung stehenden Lenkantrieb erzeugt.

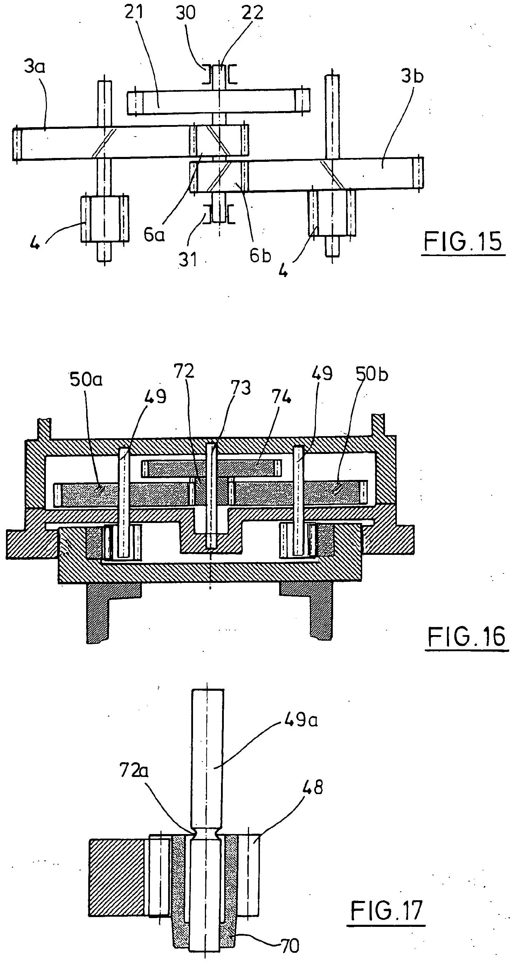

Das Antriebsgetriebe weist eine erste Stufe auf mit zwei Ritzeln, von denen einer bei 48 dargestellt ist. Eine Ritzelwelle 49 ist radial nachgiebig ausgebildet. In Fig. 17 ist die Ritzelwelle 49 vergrößert gezeigt. Sie hält eine Hülse 70 als Ritzel, welche die Welle 49 mit Abstand umgibt, jedoch am unteren Ende fest auf der Welle 49 sitzt. Außerdem weist die Ritzelwelle bei 72 eine Einschnürung auf, durch welche die radial nachgebende Wirkung erreicht wird.

Auf der Ritzelwelle 49 sitzt ein Stirnrad 50 der zweiten Getriebestufe, wobei die Ritzelwelle 49 im Getriebegehäuseabschnitt 1a bzw. im Drehschemel 44 gelagert ist. Das Stirnrad 50 kämmt mit einem Ritzel 51 auf der Welle 42 des Motors 41. Da ein zweisträngiges Stirnradgetriebe vorgesehen ist, ist auch ein weiteres Stirnrad entsprechend dem Stirnrad 50 vorgesehen, das jedoch hier nicht gezeigt ist.

Die Lagerung des Nabenabschnitts 8a erfolgt in gleicher Weise, wie dies in Verbindung mit den Fign. 1 und 2 beschrieben ist.

Bei der Ausführungsform nach Fig. 4 ist ein Unterschied zu der nach Fig. 3 im Hinblick auf die Drehschemellagerung und im Hinblick auf das Antriebsgetriebe zu sehen. Im übrigen sind gleiche Teile wie zur Ausführungsform nach Fig. 3 mit gleichen Bezugszeichen versehen.

Bei der Ausführungsform nach Fig. 4 weist der Drehschemel 44 einen vertikalen Zapfen 71 auf, der mittels Kegelrollenlager 67a, 67b im Rahmen 46 drehbar gelagert ist.

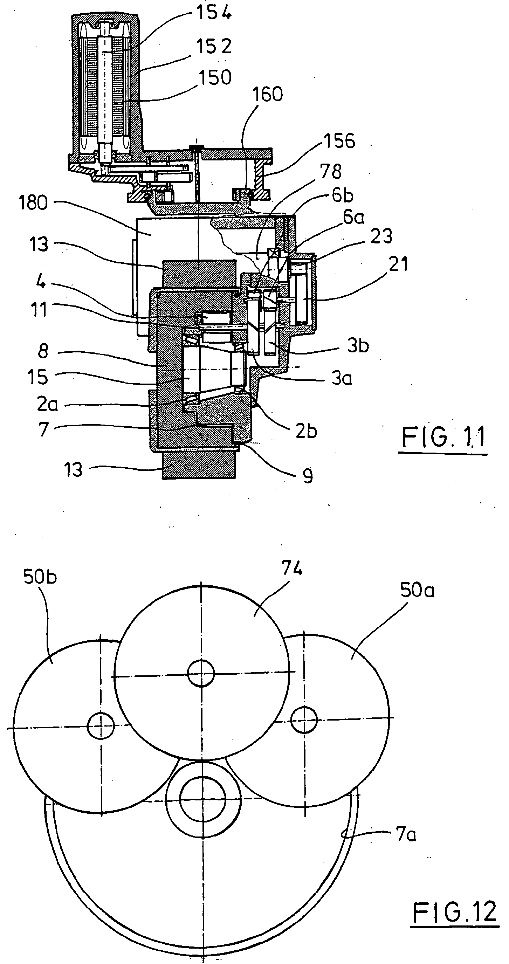

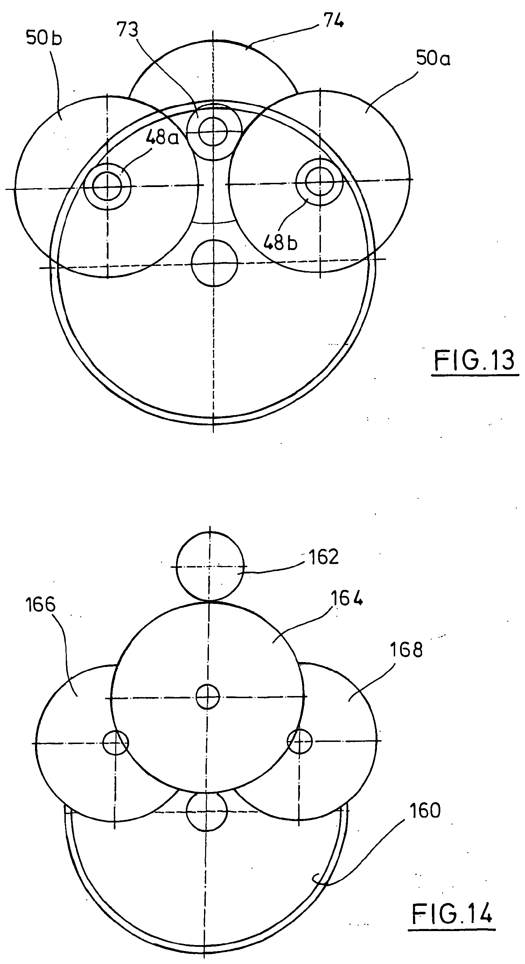

In Fig. 4 sind die Ritzel 48a, 48b in gleicher Weise gelagert, wie das in Fig. 3 gezeigte Ritzel 48. Auf den Ritzelwellen 49 sitzt jeweils ein Stirnrad 50a, 50b, die mit einem Ritzel 72 kämmen, das auf einer Ritzelwelle 73 für ein weiteres Stirnrad 74 sitzt. Das Stirnrad 74 wird vom Ritzel 75 auf der Welle 42 des Antriebsmotors 41 angetrieben. Der Aufbau des dreistufigen Stirnradgetriebes geht auch aus den Fign. 12 und 13 hervor, wobei Fig. 12 das Getriebe von der Seite des Motors 41 und Fig. 13 den Aufbau auf der gegenüberliegenden Seite wiedergibt. Fig. 16 zeigt die Lagerung der Ritzelwelle 73 vergrößert, die relativ lang ausgeführt und radial nachgebend ist. Kommt es bei dem gezeigten zweisträngigen Dreistufengetriebe zu einer ungleichen Lastverteilung, wird die Ritzelwelle 73 radial so ausgelenkt, das ein unterschiedlicher Krafteingriff des Ritzels 72 mit den Stirnrädern 50a, 50b erfolgt, was zu einer Vergleichsmäßigung der Kraftübertragung führt.

Eine Vergleichmäßigung der Kraftübertragung ist im übrigen auch in Fig. 15 gezeigt, die eine dreistufige Stirnradgetriebeanordnung zeigt, wie es etwa bei der Ausführungsform von Fig. 2 eingesetzt werden kann. Auch hier werden wiederum gleiche Teile mit gleichen Bezugszeichen versehen. Die Ritzelwelle 22 ist axial verschiebbar in Lagern 30, 31 gelagert. Kommt es zu einer ungleichmäßigen Kraftübertragung auf den beiden gezeigten Getriebesträngen, ändert sich der Krafteingriff zwischen den Ritzeln 6a, 6b einerseits und den zugeordneten Stirnrädern 3a, 3b andererseits. Dadurch vergleichmäßigt sich die Kraftübertragung.

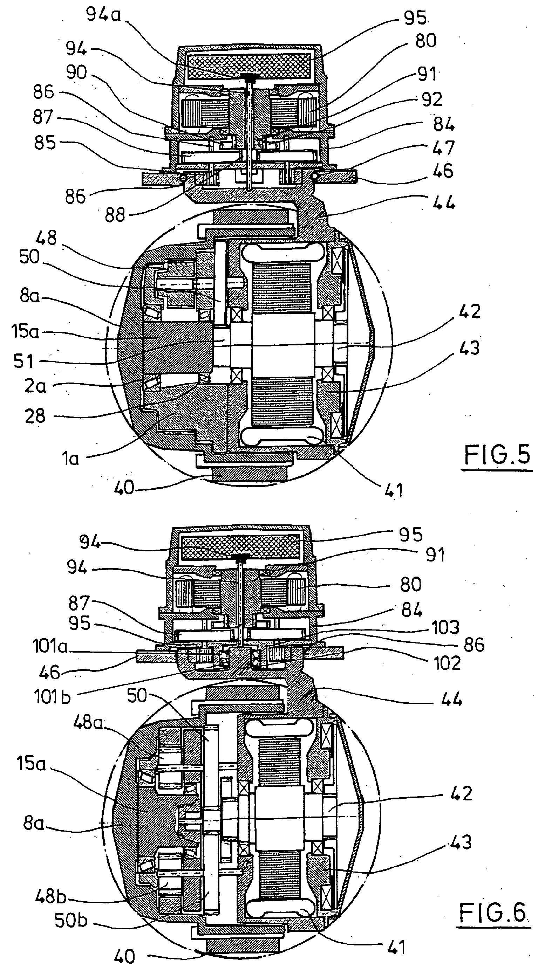

Die in Fig. 5 gezeigte Ausführungsform gleicht im Hinblick auf das angetriebene Rad und den Radantrieb der Ausführungsform nach Fig. 3. In Fig. 5 ist ein Lenkmotor 18 vorgesehen, der die Lenkbewegung des Drehschemels 44 erzeugt. Der Lenkmotor wirkt über ein dreistufiges Stirnradgetriebe als Lenkradgetriebe auf den Drehschemel 44. Auf einer im Motorgehäuse 84 drehbar gelagerten Ritzelwelle 86 ist ein Stirnrad 87 einer zweiten Stufe des Stirnradgetriebes angeordnet. Das Rad 87 kämmt mit einem Ritzel 88, das auf einer radial nachgiebig gestalteten Ritzelwelle angeordnet ist. Ein ebenfalls auf der Ritzelwelle angeordnetes Rad 90 der dritten Stufe kämmt mit einem auf der Motorwelle 91 angeordneten oder auf dieser gebildeten Ritzel 92. Zwei Stränge werden von Ritzelwellen 86 mit Ritzeln 85 und Rädern 87 gebildet, wobei die Abtriebsräder 87 gegenüberliegend am Ritzel 88 angeordnet sind. Eine Ritzelwelle mit Ritzel 88 und Rad 90 können ebenfalls mehrfach vorhanden sein und mit weiteren Paaren von Ritzelwellen 86 mit Ritzeln 85 und Rädern 87 kämmen, so daß sich die Antriebsleistung auch auf mehr Stränge als zwei verteilen kann. Die Lenkmotorwelle 91 ist als Hohlwelle ausgeführt, so daß der Lenkwinkel mittels einer am Drehschemel 44 befestigten Sensorwelle 94 erfaßt werden kann. Sie führt zu einem Sensor 94a in einer Steuervorrichtung 95 für die gezeigten Motoren. Die Steuervorrichtung 95 befindet sich in einer oberen Kammer des Lenkmotorgehäuses. Eine berührende Dichtung 96 dichtet den Drehschemel 44 gegenüber dem Getriebegehäuse 84 ab. Fahrmotor 41 bzw. Lenkmotor 80 kann auch durch einen Hydromotor ersetzt sein.

Fig. 6 entspricht im Hinblick auf den Radantrieb der Ausführungsform nach Fig. 4, so daß auch hier keine näheren Erläuterungen mehr gemacht werden. Es werden auch gleiche Bezugszeichen verwendet. In Fig. 6 ist ein Lagerzapfen 102 mit dem Drehschemel 44 verbunden, auf dem beabstandet zwei Kegelrollenlager 101a, 101b angeordnet sind, die sich an der Außenseite auf einem Ringbund eines Wandabschnitts 103 des Getriebegehäuses 84 abstützen.

Der Lenkantrieb für die Ausführungsform nach Fig. 6 gleicht dem nach Fig. 5, so daß insoweit auf Fig. 5 zu verweisen ist.

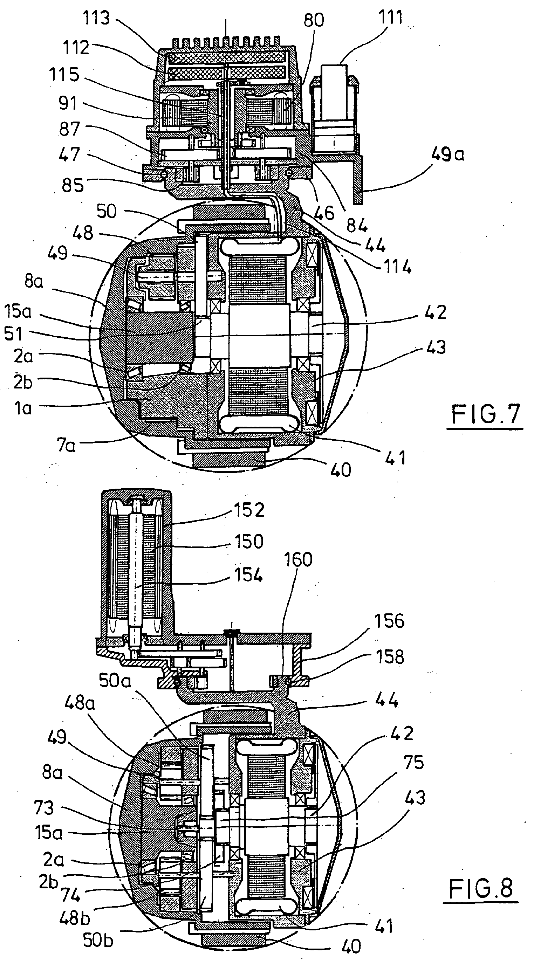

Die Ausführungsform nach Fig. 7 gleicht im Hinblick auf den Fahrantrieb der Fig. 3, so daß auch hier keine Erläuterungen folgen. Es werden auch gleiche Bezugszeichen verwendet.

Der in Fig. 7 dargestellte Lenkantrieb gleicht dem Lenkantrieb nach den Fign. 5 und 6 und soll daher ebenfalls nicht weiter beschrieben werden. In der oberen Kammer des Motorgehäuses sind zwei Steuerungen 112, 113 angeordnet für die Steuerung des Fahrmotors 41 und für den Lenkmotor 80. An einem Flansch 49a des Getriebegehäuses 84 ist ein Hubzylinder 111 angeordnet. Mithin liegt eine kompakte Funktionseinheit vor für die Funktionen Fahren, Lenken und Heben.

Wie in Fig. 7 ferner dargestellt, sind Stromleitungen 114 durch die hohle Sensorwelle 115 von der Fahrsteuerung 113 zum Antriebsmotor 41 geführt.

Die Ausführungsform nach Fig. 8 gleicht im Hinblick auf den Fahrantrieb derjenigen nach Fig. 4, so daß gleiche Bezugszeichen verwendet werden.

Ein Lenkmotor 150 mit einem Gehäuse 152 und einer Antriebswelle 154 sitzt exzentrisch zur Drehachse des Drehschemels 44 auf einem Getriebegehäuse 156, das seinerseits mittels Vierpunktlager 158 den Drehschemel drehbar lagert. Im Getriebegehäuse 156 befindet sich ein dreistufiges, vorzugsweise zweisträngiges Stirnradgetriebe, das von der Welle 154 angetrieben ist. Die Abtriebsritzel kämmen mit einem Hohlrad 160, das vom Drehschemel gebildet ist. In Fig. 14 ist die Anordnung der Getrieberäder des Stirnradgetriebes nach Fig. 8 von der Motorseite aus gesehen gezeigt. Ein mit der Welle 154 verbundenes Ritzel 162 treibt ein Stirnrad 164 an, auf dessen Welle ein Ritzel sitzt (in Fig. 14 nicht zu erkennen), das mit zwei gegenüberliegenden Stirnrädern 166, 168 kämmt. Auf jeder Welle der Stirnräder 166, 168 sitzt ein Ritzel, das mit dem Hohlrad 160 kämmt.

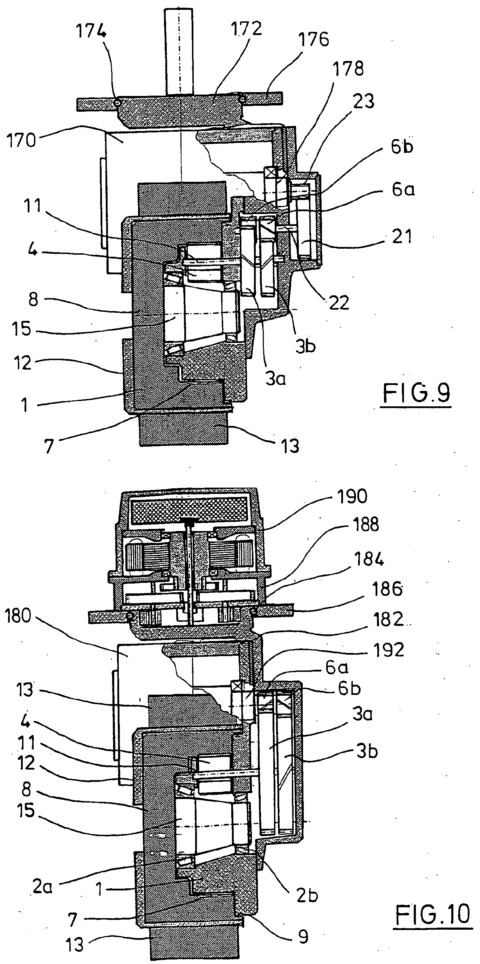

Die Ausführungsform nach Fig. 9 gleicht teilweise der nach Fig. 2, so daß gleiche Teile mit gleichen Bezugszeichen versehen sind. Ein Fahrmotor 170 sitzt vor oder hinter dem Rad 13 in einem Drehschemel 172, der mittels Vierpunktlager 174 im Rahmen 176 drehbar gelagert ist. Die Antriebswelle 178 des Motors 170 weist das Ritzel 23 auf, das mit dem Stirnrad 21 kämmt. Im übrigen gleicht das dreistufige zweisträngige Stirnradgetriebe für den gezeigten Fahrantrieb demjenigen nach Fig. 2.

Das Fahrgetriebe des Fahrantriebs für das Rad nach der Ausführungsform nach Fig. 10 gleicht dem nach Fig. 1, so daß auch insoweit gleiche Bezugszeichen verwendet werden. Ein Fahrmotor 180 ist wiederum vor oder hinter dem Rad 13 angeordnet und sitzt in einem Drehschemel 182, der mittels Vierpunktlager 184 im Rahmen 186 drehbar gelagert ist. Auf dem Rahmen sitzt ein Getriebegehäuse 188 und auf diesem ein Motorgehäuse 190 für einen Lenkantrieb, wie er in Verbindung mit den Fign. 5 und 6 beschrieben wurde. Daher wird auf den Lenkantrieb nicht weiter eingegangen. Eine Motorwelle 192 hält die Ritzel 6a, 6b, die mit den schräg verzahnten Stirnrädern 3a, 3b zusammenwirken, wie dies in Verbindung mit Fig. 1 beschrieben wurde.

In Fig. 11 ist ein Fahrantrieb entsprechend Fig. 10 dargestellt, wobei das angetriebene Rad durch einen Lenkantrieb gemäß Fig. 8 gelenkt wird. Daher werden insoweit gleiche Bezugszeichen verwendet.

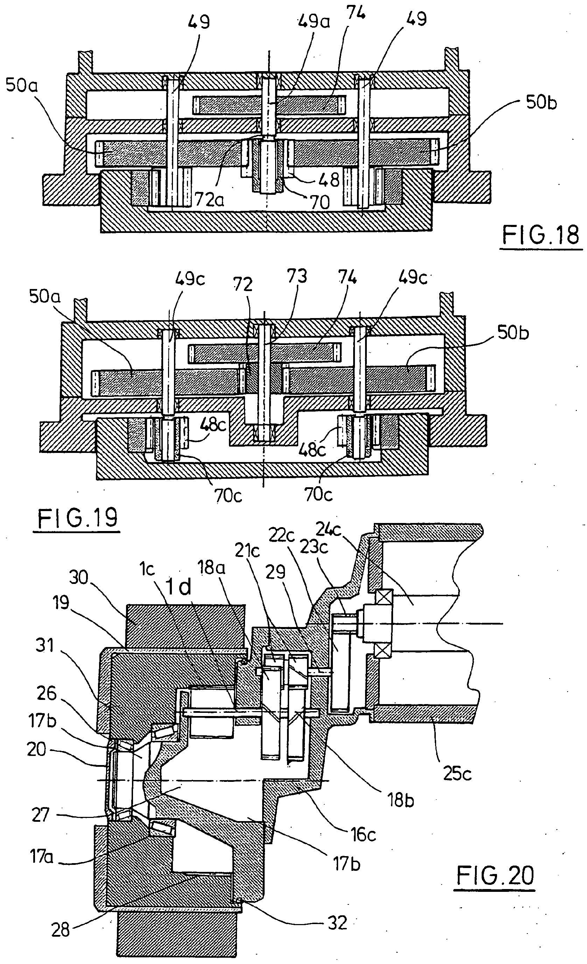

Soweit in Fig. 18 gleiche Teile verwendet werden wie bei der Ausführungsform nach Fig. 16 sind sie mit den gleichen Bezugszeichen versehen. Man erkennt, daß in Fig. 18 die Welle 73 durch die Welle 49a gemäß Fig. 17 ersetzt ist, die in Fig. 18 in der oberen Seitenwand des Getriebegehäuses und in einer Zwischenwand drehbar gelagert ist. Sie hält am unteren Ende die Hülse 70 mit dem Ritzel 48, das mit gegenüberliegenden Stirnrädern 50a, 50b kämmt. Wie in Fig. 17 umgibt die Hülse 70 die Welle 49a im Abstand, so daß sie radial nachgeben kann, wie auch die Welle 49a selbst, die eine ringförmige Nut 72a aufweist, durch welche die Welle leichter radial nachgebend wirken kann, um eine Vergleichmäßigung der Kraftübertragung über die beiden Stränge des gezeigten Getriebes zu bewerkstelligen.

Soweit in der Ausführungsform nach Fig. 19 gleiche Teile wie in Fig. 16 verwendet sind, sind sie mit gleichen Bezugszeichen versehen. Der Unterschied zu Fig. 16 liegt darin, daß die Ritzelwellen 49c, die den Ritzelwellen 49 nach Fig. 16 im Hinblick auf die Funktion gleichen, an ihrem unteren Ende wiederum eine Hülse 70c tragen, an denen ein Ritzel 48c ausgebildet ist. Die Welle 49c ist im unteren Bereich radial nachgebend, wie auch die Hülsen 70c, die die Welle 49c mit Abstand umgeben und nur am unteren Ende drehfest mit der Welle 49c verbunden sind. Auch auf diese Weise wird ein Ausgleich bei einer unterschiedlichen Kraftübertragung in den beiden Strängen des Getriebes erhalten.

Bei der Ausführungsform nach Fig. 20 sitzt ein Reifen 13 auf einer Radfelge 19, und innerhalb der Radfelge befindet sich ein topfförmiger Radnabenabschnitt 31, der mittig eine Öffnung aufweist, welche durch eine Kappe 20 abgeschlossen ist. Der Nabenabschnitt 31 ist als Hohlrad ausgebildet mit einer Ringzahnung 28. Die Ringzahnung 28 befindet sich im Inneren des zylindrischen Abschnitts des Nabenabschnitts 31. Mit dem Hohlrad kämmen zwei Ritzel, von denen eines bei 1c dargestellt ist. Das Ritzel 1c ist mittels einer Welle 1d in einem Nabenträger 27 gelagert, der sich in das Innere des Nabenabschnitts 31 hinein erstreckt und einen axialen teils konischen Zapfen 26 aufweist, der in die gezeigte Öffnung des Nabenabschnitts 31 hinein steht. Auf dem Zapfen 26 sind ein erstes Kegelrollenlager 17a und ein zweites Kegelrollenlager 17b gelagert, die, wie erkennbar, einen unterschiedlichen Durchmesser aufweisen. Das innere Lager 17a hat einen größeren Durchmesser als das äußere. Zwischen dem Nabenträger 27 und dem Nabenabschnitt 31a befindet sich eine berührende Dichtung 32, welche das Eindringen von Verunreinigungen zu den Lagern hin verhindern soll.

Die Welle 1d wird angetrieben von einem Stirnrad 18a, während das parallel angeordnete Stirnrad 18b über eine entsprechende Ritzelwelle das nicht gezeigte zweite Ritzel antreibt. Die Stirnräder 18a, 18b werden von Ritzeln 21 c angetrieben, welche ihrerseits von einem Stirnrad 22c angetrieben sind, das mit einem Ritzel 23c kämmt, das auf einer Antriebswelle 24c eines Motors 25c sitzt bzw. mit dieser ausgebildet ist. Das gezeigte Stirnradgetriebe ist bis auf die Ritzel 1c innerhalb eines Getriebegehäuses 16c angeordnet bzw. gelagert, das an dem Motor 25c bzw. seinem Gehäuse angeflanscht ist. Es hält seinerseits den Nabenträger 27.

## Patentansprüche

1. Radnabenantrieb für ein Flurförderzeug, mit einem Nabenträger und einer am Nabenträger drehbar gelagerten Nabe, mindestens einem Wälzlager (2a, 2b) zwischen Nabenträger und Nabe, einem Untersetzungsgetriebe zumindest teilweise innerhalb der Nabe mit einer mit einem Antriebsmotor gekoppelten Eingangswelle (5, 78, 178, 192) und einem Abtriebsteil, mit dem die Nabe gekoppelt ist, wobei ein topfförmiger Nabenabschnitt (8) vorgesehen ist, mit einem Bodenabschnitt und einem Wandabschnitt, mit dem Bodenabschnitt ein mittiger Lagerzapfen (15) verbunden ist, den der Wandabschnitt mit radialem Abstand umgibt und auf dem das mindestens eine Wälzlager (2a, 2b) sitzt, das radial außen an einem Abschnitt (1 ) eines als Nabenträger dienenden Getriebegehäuses abgestützt ist, das seinerseits ein mehrstufiges Stirnradgetriebe als Untersetzungsgetriebe enthält, von dem mindestens eine Abtriebsstufe innerhalb des Nabenabschnitts (8) angeordnet ist, wobei der Wandabschnitt des Nabenabschnitts (8) ein mit dem Antriebsteil des Stirnradgetriebes in Wirkverbindung stehendes Hohlrad (7) bildet, **dadurch gekennzeichnet, dass** zwei axial beabstandete Wälzlager (2a, 2b) auf dem Lagerzapfen (15) angeordnet sind, dass das Stirnradgetriebe mehrsträngig vorgesehen ist und dass mindestens zwei Ritzel (4, 48a, 48b) mit dem Hohlrad (7) kämmen, wobei die Ritzelwellen (49, 11) durch eine den offenen Teil des Nabenabschnitts (8) abschließende Wand des Getriebegehäuses geführt sind und mindestens eine weitere Stirnradgetriebestufe (3a, 3b, 6a, 6b) im Getriebegehäuse außerhalb des Nabenabschnitts (8) mit der Eingangswelle gekoppelt ist.

2. Radnabenantrieb für ein Flurförderzeug, mit einem Nabenträger und einer am Nabenträger drehbar gelagerten Nabe, mindestens einem Wälzlager (17a, 17b) zwischen Nabenträger und Nabe, einem Untersetzungsgetriebe zumindest teilweise innerhalb der Nabe mit einer mit einem Antriebsmotor gekoppelten Eingangswelle (24c) und einem Antriebsteil, mit dem die Nabe gekoppelt ist, wobei ein topfförmiger Nabenabschnitt (31) mit einem Wandabschnitt vorgesehen ist, mit dem Nabenträger ein mittiger Lagerzapfen (26) verbunden ist, den der Nabenabschnitt mit radialem Abstand umgibt und auf dem mindestens ein Wälzlager sitzt, das radial außen am Nabenabschnitt abgestützt ist, ein mehrstufiges Stirnradgetriebe als Untersetzungsgetriebe vorgesehen ist, von dem mindestens eine Abtriebsstufe innerhalb des Nabenabschnitts (31) angeordnet ist, wobei der Wandabschnitt des Nabenabschnitts (31 ) ein mit dem Abtriebsteil des Stirnradgetriebes in Wirkverbindung stehendes Hohlrad (28 ) bildet, **dadurch gekennzeichnet, daß** Stirnradgetriebe mehrsträngig vorgesehen ist und daß mindestens zwei Ritzel (1c) mit dem Hohlrad (28) kämmen, wobei die Ritzelwellen (1d) durch eine den offenen Teil des Radnabenabschnitts abschließende Wand des Getriebegehäuses geführt sind und mindestens eine weitere Stirnradgetriebestufe im Getriebegehäuse außerhalb des Nabenabschnitts (31) mit der Eingangswelle gekoppelt ist.

3. Radnabenantrieb nach Anspruch 1, **dadurch gekennzeichnet, daß** eine dritte Getriebestufe aus einem mit der Eingangswelle gekoppelten Ritzel (23) und einem mit dem Ritzel kämmenden Stirnrad (21) besteht, wobei eine Welle des Stirnrads zwei Ritzel (6a, 6b) hält, die jeweils mit einem Stirnrad (3a, 3b) eines Strangs kämmen.

4. Radnabenantrieb nach Anspruch 1 oder 2, **dadurch gekennzeichnet, daß** ein Ritzel auf einer koaxial zur Radnabe oder zur Radnabe versetzten Antriebsachse verschieblich angeordnet ist und zwei gegenläufig schrägverzahnte Abschnitte aufweist, die mit zugeordneten, schrägverzahnten Stirnrädern je Strang kämmen.

5. Radnabenantrieb nach einem der Ansprüche 1 bis 3, **dadurch gekennzeichnet, daß** eine Ritzelwelle, die zwei Ritzel (5a, 6a) bzw. Ritzelabschnitte mit gegenläufiger Schrägverzahnung hält, die mit jeweils einem Stirnrad (3a, 3b) je Strang kämmen, axial beweglich gelagert ist.

6. Radnabenantrieb nach einem der Ansprüche 1 bis 3, **dadurch gekennzeichnet, daß** die Wellen von mit dem Hohlrad zusammenwirkenden Ritzeln radial nachgiebig sind.

7. Radnabenantrieb nach einem der Ansprüche 1 bis 3, **dadurch gekennzeichnet, daß** die Ritzelwelle eines mit den Stirnrädern jeweils eines Stranges kämmenden Ritzels radial nachgebend ist, wobei die Stirnräder gegenüberliegend am Ritzel angeordnet sind.

8. Radnabenantrieb nach einem der Ansprüche 1 bis 3, **dadurch gekennzeichnet, daß** das Ritzel, das mit den Stirnrädern jeweils eines Strangs kämmt, radial nachgebend auf der Ritzelwelle angeordnet ist und die Stirnräder einander gegenüberliegend am Ritzel angeordnet sind.

9. Radnabenantrieb nach Anspruch 6 oder 7, **dadurch gekennzeichnet, daß** die Ritzelwelle eine ringförmige Einschnürung aufweist.

10. Radnabenantrieb nach einem der Ansprüche 6 bis 9, **dadurch gekennzeichnet, daß** das Ritzel als eine die Ritzelwelle umgebende Hülse ausgebildet ist, die an einem Ende auf der Ritzelwelle sitzt.

11. Radnabenantrieb nach Anspruch 1, **dadurch gekennzeichnet, daß** das Getriebegehäuse Teil eines Drehschemels (172, 182) ist, der um eine vertikale Achse in einem Rahmen des Flurförderzeugs drehbar lagerbar ist.

12. Radnabenantrieb nach einem der Ansprüche 1 bis 11, **dadurch gekennzeichnet, daß** ein Antriebsmotor koaxial zur Radlagerachse im Getriebegehäuse angeordnet ist.

13. Radnabenantrieb nach Anspruch 11 und 12, **dadurch gekennzeichnet, daß** der Antriebsmotor (170, 180) innerhalb des Drehschemels (172, 182) angeordnet ist.

14. Radnabenantrieb nach Anspruch 11 oder 13, **dadurch gekennzeichnet, daß** der Drehschemel (172, 182) mittels eines Vierpunktlagers (174, 184) im Rahmen des Flurförderzeugs lagerbar ist.

15. Radnabenantrieb nach Anspruch 11 oder 12 **dadurch gekennzeichnet, daß** ein Zapfen des Drehschemels mittels mindestens eines Kegelrollenlagers im Rahmen des Flurförderzeugs lagerbar ist.

16. Radnabenantrieb nach Anspruch 1 3, 14 oder 15, **dadurch gekennzeichnet, daß** auf dem Rahmen des Flurförderzeugs ein Lenkmotor über ein Lenkgetriebe anbringbar ist, wobei ein Lenkgetriebegehäuse ein mehrstufiges Stirnradgetriebe enthält, dessen mindestens eines Abtriebsrad mit einem als Hohlrad ausgebildeten Abschnitt des Drehschemels zusammenwirkt.

17. Radnabenantrieb nach Anspruch 16, **dadurch gekennzeichnet, daß** mit dem Hohlrad des Drehschemels ein vertikaler Lagerzapfen verbunden ist, auf dem mindestens ein Wälzlager sitzt und das sich seinerseits an einem Ringbund des Lenkgetriebegehäuses (84) abstützt.

18. Radnabenantrieb nach einem der Ansprüche 12 bis 17, **dadurch gekennzeichnet, daß** dem Antriebsmotor eine Bremse zugeordnet ist.

19. Radnabenantrieb nach Anspruch 16, **dadurch gekennzeichnet, daß** mit dem Drehschemel eine Sensorwelle verbunden ist, die sich durch eine hohle Lenkmotorwelle erstreckt und mit einem Sensor in einem Raum des Lenkmotorgehäuses verbunden ist.

20. Radnabenantrieb nach Anspruch 19, **dadurch gekennzeichnet, daß** in dem Raum des Lenkmotorgehäuses eine Steuervorrichtung für den Lenkmotor und/oder den Antriebsmotor angeordnet ist.

21. Radnabenantrieb nach Anspruch 20, **dadurch gekennzeichnet, daß** Leitungen für den Antriebsmotor von der Steuervorrichtung über die hohle Sensorwelle geführt sind.

22. Radnabenantrieb nach einem der Ansprüche 1 bis 21, **dadurch gekennzeichnet, daß** ein Antriebsmotor (170, 180) vor oder hinter einem Antriebsrad (13) anordenbar ist und eine oder zwei Stufen des mehrstufigen Stirnradgetriebes seitlich am Rad (13) anordenbar ist/sind.

23. Radnabenantrieb nach einem der Ansprüche 1 bis 22, **dadurch gekennzeichnet, daß** eine berührende Dichtung (9,32) zwischen dem Nabenabschnitt (8, 31) und dem Getriebegehäuse angeordnet ist.

24. Radnabenantrieb nach einem der Ansprüche 1 bis 23, **dadurch gekennzeichnet, daß** dem Stirnradgetriebe ein Planetengetriebe vor- oder nachgeordnet ist.

## Claims

1. A wheel hub drive for an industrial truck comprising a hub carrier and a hub rotatably mounted on the hub carrier, at least one roller bearing (2a, 2b) between the hub carrier and the hub, a reduction gear at least partially inside the hub having an input shaft (5, 78, 178, 192) coupled to a drive motor and an output part, the hub being coupled thereto, wherein a pot-shaped hub portion (8) is provided, said pot-shaped hub portion having a base portion and a wall portion, a central bearing pin (15) being connected to the base portion, the wall portion surrounding said central bearing pin with a radial spacing and the at least one roller bearing (2a, 2b) being located on said central bearing pin, said roller bearing being supported radially outwardly on a portion (1) of a gear housing serving as a hub carrier, which in turn contains a multi-stage spur gear as a reduction gear, at least one output stage thereof being arranged inside the hub portion (8), wherein the wall portion of the hub portion (8) forms a ring gear (7) operatively connected to the output part of the spur gear, **characterized in that** two axially spaced-apart roller bearings (2a, 2b) are arranged on the bearing pin (15), **in that** the spur gear is provided to be multi-stage and **in that** at least two pinions (4, 48a, 48b) mesh with the ring gear (7), wherein the pinion shafts (49, 11) are guided through a wall of the gear housing terminating the open part of the hub portion (8), and at least one further spur gear stage (3a, 3b, 6a, 6b) in the gear housing outside the hub portion (8) is coupled to the input shaft.

2. The wheel hub drive for an industrial truck comprising a hub carrier and a hub rotatably mounted on the hub carrier, at least one roller bearing (17a, 17b) between the hub carrier and the hub, a reduction gear at least partially inside the hub having an input shaft (24c) coupled to a drive motor and an output part, the hub being coupled thereto, wherein a pot-shaped hub portion (31) is provided with a wall portion, a central bearing pin (26) being connected to said hub carrier, the hub portion surrounding said central bearing pin with a radial spacing, and at least one roller bearing being located thereon, said roller bearing being supported radially outwardly on the hub portion, a multi-stage spur gear is provided as a reduction gear, at least one output stage thereof being arranged inside the hub portion (31), wherein the wall portion of the hub portion (31) forms a ring gear (28) operatively connected to the output part of the spur gear, **characterized in that** the spur gear is provided to be multi-stage and **in that** at least two pinions (1c) mesh with the ring gear (28), wherein the pinion shafts (1d) are guided through a wall of the gear housing terminating the open part of the wheel hub portion, and at least one further spur gear stage in the gear housing outside the hub portion (31) is coupled to the input shaft.

3. The wheel hub drive according to Claim 1, **characterized in that** a third gear stage consists of a pinion (23) coupled to the input shaft and a spur gear (21) meshing with the pinion, wherein a shaft of the spur gear retains two pinions (6a, 6b), which in each case mesh with a spur gear (3a, 3b) of a stage.

4. The wheel hub drive according to Claim 1 or 2, **characterized in that** a pinion is displaceably arranged on a drive axle coaxially to the wheel hub or offset relative to the wheel hub and comprises two opposing obliquely toothed portions which mesh with associated obliquely toothed spur gears for each stage.

5. The wheel hub drive according to one of Claims 1 to 3, **characterized in that** a pinion shaft, which retains two pinions (5a, 6a) and/or pinion portions with opposing oblique teeth which mesh with one respective spur gear (3a, 3b) for each stage, is axially movably mounted.

6. The wheel hub drive according to one of Claims 1 to 3, **characterized in that** the shafts of pinions cooperating with the ring gear are radially flexible.

7. The wheel hub drive according to one of Claims 1 to 3, **characterized in that** the pinion shaft of a pinion meshing with the spur gears of one respective stage is radially flexible, wherein the spur gears are arranged opposite one another on the pinion.

8. The wheel hub drive according to one of Claims 1 to 3, **characterized in that** the pinion which meshes with the spur gears of one respective stage is arranged so as to be radially flexible on the pinion shaft and the spur gears are arranged opposite one another on the pinion.

9. The wheel hub drive according to Claim 6 or 7, **characterized in that** the pinion shaft has an annular constriction.

10. The wheel hub drive according to one of Claims 6 to 9, **characterized in that** the pinion is configured as a sleeve surrounding the pinion shaft, said sleeve being located at one end on the pinion shaft.

11. The wheel hub drive according to Claim 1, **characterized in that** the gear housing is part of a pivot plate (172, 182) which is able to be rotatably mounted about a vertical axis in a frame of the industrial truck.

12. The wheel hub drive according to one of Claims 1 to 11, **characterized in that** a drive motor is arranged coaxially to the wheel bearing axle in the gear housing.

13. The wheel hub drive according to Claim 11 and 12, **characterized in that** the drive motor (170, 180) is arranged inside the pivot plate (172, 182).

14. The wheel hub drive according to Claim 11 or 13, **characterized in that** the pivot plate (172, 182) is able to be mounted by means of a four-point bearing (174, 184) in the frame of the industrial truck.

15. The wheel hub drive according to Claim 11 or 12, **characterized in that** a pin of the pivot plate is able to be mounted by means of at least one ball bearing in the frame of the industrial truck.

16. The wheel hub drive according to Claim 13, 14, or 15, **characterized in that** a steering motor is able to be attached to the frame of the industrial truck via a steering gear, wherein a steering gear housing contains a multi-stage spur gear, the at least one output gear thereof cooperating with a portion of the pivot plate configured as a ring gear.

17. The wheel hub drive according to Claim 16, **characterized in that** a vertical bearing pin is connected to the ring gear of the pivot plate, at least one roller bearing being located thereon, said roller bearing in turn being supported on an annular collar of the steering gear housing (84).

18. The wheel hub drive according to one of Claims 12 to 17, **characterized in that** a brake is assigned to the drive motor.

19. The wheel hub drive according to Claim 16, **characterized in that** a sensor shaft is connected to the pivot plate, said sensor shaft extending through a hollow steering motor shaft and being connected to a sensor in a space of the steering motor housing.

20. The wheel hub drive according to Claim 19, **characterized in that** a control device for the steering motor and/or the drive motor is arranged in the space of the steering motor housing.

21. The wheel hub drive according to Claim 20, **characterized in that** cables for the drive motor are guided from the control device via the hollow sensor shaft.

22. The wheel hub drive according to one of Claims 1 to 21, **characterized in that** a drive motor (170, 180) is able to be arranged upstream or downstream of a drive wheel (13), and one or two stages of the multi-stage spur gear is/are able to be arranged laterally on the wheel (13).

23. The wheel hub drive according to one of Claims 1 to 22, **characterized in that** a contact seal (9, 32) is arranged between the hub portion (8, 31) and the gear housing.

24. The wheel hub drive according to one of Claims 1 to 23, **characterized in that** a planetary gear is arranged upstream or downstream of the spur gear.

## Revendications

1. Commande de moyeu de roue pour un chariot de manutention, avec un support de moyeu et un moyeu supporté en rotation sur le support de moyeu, au moins un palier à roulement (2a, 2b) entre le support de moyeu et le moyeu, un engrenage réducteur au moins partiellement à l'intérieur du moyeu avec un arbre d'entrée (5, 78, 178, 192) couplé à un moteur d'entraînement et une partie de sortie à laquelle est couplé le moyeu, un tronçon de moyeu (8) en forme de pot étant prévu, avec un tronçon de fond et un tronçon de paroi, un tourillon (15) central étant raccordé au tronçon de fond et étant entouré de façon radialement espacée par le tronçon de paroi et sur lequel repose le palier à roulement (2a, 2b) au moins au nombre de un qui s'appuie à l'extérieur radialement sur un tronçon (1) d'un carter d'engrenage servant de support de moyeu et qui contient de son côté un engrenage cylindrique à plusieurs étages en tant qu'engrenage réducteur dont au moins un étage de sortie est disposé à l'intérieur du tronçon de moyeu (8), le tronçon de paroi du tronçon de moyeu (8) formant une roue creuse (7) qui est en liaison opérationnelle avec la partie de sortie de l'engrenage cylindrique, **caractérisée en ce que** deux paliers à roulement (2a, 2b) espacés axialement sont disposés sur le tourillon (15), **en ce que** l'engrenage cylindrique est prévu avec plusieurs trains et **en ce qu'**au moins deux pignons (4, 48a, 48b) engrènent avec la roue creuse (7), les arbres de pignons (49, 11) étant guidés à travers une paroi du carter d'engrenage terminant la partie ouverte du tronçon de moyeu (8), et au moins un autre étage d'engrenage cylindrique (3a, 3b, 6a, 6b) étant couplé à l'arbre d'entrée dans le carter d'engrenage à l'extérieur du tronçon de moyeu (8).

2. Commande de moyeu de roue pour un chariot de manutention, avec un support de moyeu et un moyeu supporté en rotation sur le support de moyeu, au moins un palier à roulement (17a, 17b) entre support de moyeu et moyeu, un engrenage réducteur au moins partiellement à l'intérieur du moyeu avec un arbre d'entrée (24c) couplé à un moteur d'entraînement et une partie de sortie à laquelle est couplé le moyeu, un tronçon de moyeu (31) en forme de pot avec un tronçon de paroi étant prévu, un tourillon (26) central étant raccordé au support de moyeu et étant entouré de façon radialement espacée par le tronçon de moyeu et sur lequel repose au moins un palier à roulement qui s'appuie à l'extérieur radialement sur le tronçon de moyeu, un engrenage cylindrique à plusieurs étages étant prévu en tant qu'engrenage réducteur dont au moins un étage de sortie est disposé à l'intérieur du tronçon de moyeu (31), le tronçon de paroi du tronçon de moyeu (31) formant une roue creuse (28) en liaison opératoire avec la partie de sortie de l'engrenage cylindrique, **caractérisée en ce que** l'engrenage cylindrique est prévu avec plusieurs trains, et **en ce qu'**au moins deux pignons (1c) engrènent avec la roue creuse (28), les arbres de pignons (1d) étant guidés à travers une paroi du carter d'engrenage terminant la partie ouverte du tronçon de moyeu de roue, et au moins un autre étage d'engrenage cylindrique étant couplé à l'arbre d'entrée dans le carter d'engrenage à l'extérieur du tronçon de moyeu (31).

3. Commande de moyeu de roue selon la revendication 1, **caractérisée en ce qu'**un troisième étage d'engrenage se compose d'un pignon (23) couplé à l'arbre d'entrée et d'une roue cylindrique (21) engrenant avec le pignon, un arbre de la roue cylindrique retenant deux pignons (6a, 6b) qui engrènent respectivement avec une roue cylindrique (3a, 3b) d'un train.

4. Commande de moyeu de roue selon la revendication 1 ou 2, **caractérisée en ce qu'**un pignon est disposé de façon coulissante sur un axe d'entraînement de façon coaxiale au moyeu de roue ou de façon décalée par rapport au moyeu de roue et présente deux tronçons à denture hélicoïdale en sens contraire qui engrènent par train avec des roues cylindriques à denture hélicoïdale affectées.

5. Commande de moyeu de roue selon l'une des revendications 1 à 3, **caractérisée en ce qu'**un arbre de pignons, qui retient deux pignons (5a, 6a) ou respectivement des tronçons de pignons avec une denture hélicoïdale en sens contraire qui engrènent par train avec respectivement une roue cylindrique (3a, 3b), est supporté de façon axialement mobile.

6. Commande de moyeu de roue selon l'une des revendications 1 à 3, **caractérisée en ce que** les arbres de pignons coopérant avec la roue creuse sont souples radialement.

7. Commande de moyeu de roue selon l'une des revendications 1 à 3, **caractérisée en ce que** l'arbre de pignons d'un pignon engrenant avec les roues cylindriques de respectivement un train peut céder radialement, les roues cylindriques étant disposées de façon opposée sur le pignon.

8. Commande de moyeu de roue selon l'une des revendications 1 à 3, **caractérisée en ce que** le pignon qui engrène avec les roues cylindriques de respectivement un train est disposé de façon à pouvoir céder sur l'arbre de pignons, et les roues cylindriques sont disposées de façon mutuellement opposée sur le pignon.

9. Commande de moyeu de roue selon la revendication 6 ou 7, **caractérisée en ce que** l'arbre de pignons présente un étranglement annulaire.

10. Commande de moyeu de roue selon l'une des revendications 6 à 9, **caractérisée en ce que** le pignon est constitué en tant que chemise entourant l'arbre de pignons qui repose à une extrémité sur l'arbre de pignons.

11. Commande de moyeu de roue selon la revendication 1, **caractérisée en ce que** le carter d'engrenage fait partie d'une sellette pivotante (172, 182) qui peut être supportée en rotation autour d'un axe vertical dans un cadre du chariot de manutention.

12. Commande de moyeu de roue selon l'une des revendications 1 à 11, **caractérisée en ce qu'**un moteur d'entraînement est disposé de façon coaxiale à l'axe de palier de roue dans le carter d'engrenage.

13. Commande de moyeu de roue selon les revendications 11 et 12, **caractérisée en ce que** le moteur d'entraînement (170, 180) est disposé à l'intérieur de la sellette pivotante (172, 182).

14. Commande de moyeu de roue selon la revendication 11 ou 13, **caractérisée en ce que** la sellette pivotante (172, 182) peut être supportée dans le cadre du chariot de manutention au moyen d'un palier à quatre points (174, 184).

15. Commande de moyeu de roue selon la revendication 11 ou 12, **caractérisée en ce qu'**un tenon de la sellette pivotante peut être supporté dans le cadre du chariot de manutention au moyen d'au moins un roulement à rouleaux coniques.

16. Commande de moyeu de roue selon la revendication 13, 14 ou 15, **caractérisée en ce qu'**un moteur de direction peut être mis en place sur le cadre du chariot de manutention par le biais d'un engrenage de direction, un carter d'engrenage de direction contenant un engrenage cylindrique à plusieurs étages dont au moins une roue de sortie coopère avec un tronçon de la sellette pivotante constitué en tant que roue creuse.

17. Commande de moyeu de roue selon la revendication 16, **caractérisée en ce qu'**un tourillon vertical est raccordé à la roue creuse de la sellette pivotante, sur lequel repose au moins un palier à roulement qui s'appuie de son côté sur une collerette annulaire du carter d'engrenage de direction (84).

18. Commande de moyeu de roue selon l'une des revendications 12 à 17, **caractérisée en ce qu'**un frein est affecté au moteur d'entraînement.

19. Commande de moyeu de roue selon la revendication 16, **caractérisée en ce qu'**un arbre de détecteur est raccordé à la sellette pivotante et s'étend à travers un arbre de moteur de direction creux et est raccordé à un capteur dans un espace du carter de moteur de direction.

20. Commande de moyeu de roue selon la revendication 19, **caractérisée en ce qu'**un dispositif de commande pour le moteur de direction et/ou le moteur d'entraînement est disposé dans l'espace du carter de moteur de direction.

21. Commande de moyeu de roue selon la revendication 20, **caractérisée en ce que** des câbles pour le moteur d'entraînement sont guidés par le dispositif de commande via l'arbre de détecteur creux.

22. Commande de moyeu de roue selon l'une des revendications 1 à 21, **caractérisée en ce qu'**un moteur d'entraînement (170, 180) peut être disposé devant ou derrière une roue motrice, et un ou deux étages de l'engrenage cylindrique à plusieurs étages peut/peuvent être disposé(s) latéralement sur la roue (13).

23. Commande de moyeu de roue selon l'une des revendications 1 à 22, **caractérisée en ce qu'**un joint d'étanchéité frottant (9, 32) est disposé entre le tronçon de moyeu (8, 31) et le carter d'engrenage.

24. Commande de moyeu de roue selon l'une des revendications 1 à 23, **caractérisée en ce qu'**un engrenage planétaire peut être monté en amont ou en aval de l'engrenage cylindrique.
